# EUROPEAN PATENT APPLICATION

(11) **EP 2 875 737 A1**
(43) Date of publication of application: **27.05.2015**
(21) Application number: 13194137.9
(22) Date of filing: 22.11.2013
(51) Int. Cl.: A23L 1/308, A23L 1/0522, A23L 1/0526, A23L 1/0534, A23L 1/054, A23L 1/0532

(54) **Stabilised food filling composition**

(71) Applicant: Crisp Sensation Holding S.A., 1208 Geneva (CH)
(72) Inventor: Van Doorn, Kees, 5036 CL, Tilburg (NL); Michiels, Wilhelmus Johannes Gerardus, 6031 GB, Nederweert (NL)
(74) Representative: Browne, Robin Forsythe

(57) **Abstract**

A food product comprising;
an outer structure comprising a casing, coating or body of foodstuff having an internal cavity;
the filling comprising a fluid and an optional solid component, wherein the fluid includes a viscosity modifying component so that the fluid has an initial viscosity at ambient temperature, an increased viscosity when heated, wherein the viscosity falls to a lower viscosity upon cooling to ambient temperature;
wherein the viscosity modifying component comprises:

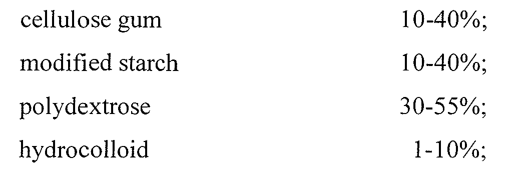

and optional further ingredients;
in the absence of any egg albumen component;
wherein the percentages of ingredients are by dry weight and are selected from the ranges quoted to total 100%.

## Description

This invention relates to a composition for stabilising a filling for a food product. The invention also relates to food products containing a stabilised filling, particularly but not exclusively to reduce or prevent leakage of the filling during heating in a conventional or microwave oven of a composite food product comprising a wholly or partially liquid or fluid filling within a solid casing, coating or in a cavity in a body of foodstuff.

Thickening agents have been used to prevent leakage of liquid fillings from composite food products. However, the thickening of the fillings is irreversible so that the liquid or fluid nature of the filling is lost.

US 6261625 discloses stabilisation of solid substrates such as meat or fish cores of coated products against loss of moisture during microwave heating. An essential component of these stabiliser compositions is a substantial proportion, up to 20%, of egg albumen.

According to a first aspect of the present invention, a food product comprises an outer structure defining an interior cavity and a filling disposed in the cavity;
wherein the outer structure comprises a casing, coating or body of foodstuff having an internal cavity;
the filling comprising a fluid and an optional solid component, wherein the fluid includes a viscosity modifying component so that the fluid has an initial viscosity at ambient temperature, an increased viscosity when heated, wherein the viscosity falls to a lower viscosity upon cooling to ambient temperature;
wherein the viscosity modifying component comprises:

| | |
|---|---|
| cellulose gum | 10-40%; |
| modified starch | 10-40%; |
| polydextrose | 30-55%; |
| hydrocolloid | 1-10%; |

and optional further ingredients;
wherein the percentages of ingredients are by dry weight and are selected from the ranges quoted to total 100%.

According to a second aspect of the present invention, a food filling viscosity modifying component comprises:

| | |
|---|---|
| cellulose gum | 10-40%; |
| modified starch | 10-40%; |
| polydextrose | 30-55%; |
| hydrocolloid | 1-10%; |

and optional further ingredients;

Advantageous embodiments of this invention do not include any egg albumen component.

Preferred viscosity modifying components do not include any egg component. Proteinaceous components may be completely excluded. These egg derived ingredients are expensive and may give rise to unwanted allergenic properties. Particularly preferred products do not contain any egg or egg components in the filling or outer structure.

The viscosity modifying component may be added as a dry powder to the filling or may be dissolved or suspended in water used for cooking the filling. An amount of the viscosity modifying component of 0.5-10%, preferably 1-6%, more preferably 3-6%, may be employed. The amount of the viscosity modifying component may be expressed by dry weight as a percentage of the total weight of the filling.

The amount of modified starch in the viscosity modifying component is preferably from about 10% to about 40%, preferably from about 10% to about 35%, especially about 12% to 18%, for example about 15%.

Preferred modified starches comprise partially degraded starch which has been modified, for example by heating or acetylation. Hydroxyalkylated starch, for example hydroxypropylated starch, may be employed. A suitable modified starch may be obtained from waxy maize and may be manufactured under the trade mark THERMFLO (RTM). An amount of about 20% to about 30%, preferably about 24%, is preferred.

Preferred cellulose gums may be selected from the group consisting of: methylcellulose, hydroxypropyl methyl cellulose, carboxymethyl cellulose and mixtures thereof. Methyl cellulose or cellulose ethers, particularly as sold under the trade mark METHOCEL. (Dow Chemical Company) for example METHOCEL A4M, is particularly preferred. An amount of about 10% to about 20%, preferably about 15%, is particularly preferred.

Suitable hydrocolloids may be selected from the group consisting of: xanthan gum, carageenan gum, guar gum, locust bean gum and mixtures thereof. Use of xanthan gum, guar gum or mixtures thereof is particularly preferred. Use of xanthan gum or a mixture of hydrocolloids containing xanthan gum is especially preferred. An amount of about 5-10%, particularly about 6%, is preferred.

Particularly good results can be obtained if the bonding crumb employed is a milled farinaceous dough extrudate containing 0.05 to 5 wt %, more preferably 0.1 to 3.0 % by dry weight of added hydrocolloid, wherein the hydrocolloid is added to the dough during extrusion. Such hydrocolloid impregnated crumb is disclosed in WO2010/001101, the disclosure of which is incorporated herein by reference for all purposes.

The bonding crumb employed in the present method typically has a mass weighted average particle size of less than 2 mm. More preferably, the bonding crumb has a mass weighted average particle size of 0.1 to 1.5 mm, even more preferably of 0.15 to 1 mm, and most preferably of 0.25 to 0.9 mm.

The hydrocolloid used in the bonding crumb may be selected from natural gums, modified gums, agar, carrageenan, furcellaran, arabinogalactan, xanthan, and combinations thereof. Preferably, the hydrocolloid is selected from natural gums and combinations thereof.

Examples of natural gums that may be employed as added hydrocolloid in the milled farinaceous dough extrudate include guar gum, xanthan gum, locust bean gum, gum Arabic, tragacanth, gum karaya, gum ghatti and combinations thereof.

Most preferably, the added hydrocolloid may be selected from guar gum, locust bean gum, xanthan gum and combinations thereof.

Polydextrose as employed in this invention is available under the trade mark LITESSE. An amount of about 30% to about 55%, preferably about 45% to about 55%, more preferably about 40%, may be used.

Further ingredients may be added as necessary. For example, flavourings, preservatives or colourants may be added.

Preferred viscosity modifying components do not contain substantial amounts of other starches. In particularly preferred embodiments, further ingredients are not present in sufficient amounts to alter the essential properties of the viscosity modifying component.

The invention is further described by means of example, but not in any limitative sense.

### EXAMPLE 1

A filling was prepared from the following raw materials:

| | |
|---|---|
| vegetable component e.g. spinach | (77%) |
| phosphate (Carfosel 3); | (2%) |
| salt; | (1% - 3%) |
| flavouring; | |
| potato starch emulsifier (Eliane MC 160); | (8%) |
| water; | (12%) |
| | 100% |

The viscosity modifier comprised:

| | |
|---|---|
| protein powder (egg albumen) | 15% |
| maize flour | 24% |
| methyl cellulose (Methocel A4M) | 15% |
| polydextrose (Litesse) | 40% |
| xanthan gum | 6% |
| | 100% |

The chicken breasts were reduced with a Wolf blender. The comminuted chicken was placed in the kitchen aid with a solution of salt, flavouring, phosphate (Carfosel 3) and water and mixed for 5 minutes. The methyl cellulose was then added, together with the potato starch emulsifier (Eliane MC 160), and mixed to form a homogenous mixture.

The vegetable component, for example, spinach was mixed with the viscosity modifier (3% w/w) in a blender. Chicken was formed into round burger of 87mm diameter. The filling (7.7g) was added and each burger was shaped into an envelope. The products were coated with milk wash, fine crumb (less than 0.8 mm), soya butter and larger crumb (1.5-2.5 mm).
The crumb was manufactured according to **WO ???**

The following formulations were prepared:

### EXAMPLE 2 STANDARD RECIPE

| raw Materials | % |
|---|---|
| modified protein powder | 15 |
| corn starch (Thermflo) | 24 |
| methyl cellulose (Methocel A4M) | 15 |
| polydextrose (Litesse) | 40 |
| xanthan gum (Carrastab) | 6 |
| Total | 100 |

### EXAMPLE 3 VARIATION OF CORN STARCH

| Raw Materials | T1.1 | T1.2 | T1,3 |
|---|---|---|---|
| protein powder | 17,00 | 15,00 | 12,25 |
| corn starch (Thermflo) | 16,00 | 24,00 | 35,00 |
| methyl cellulose (Methocel A4M) | 17,00 | 15,00 | 12,25 |
| polydextrose (Litesse) | 42,00 | 40,00 | 37,25 |
| xanthan gum (Carrastab) | 8,00 | 6,00 | 3,25 |
| Total | 100,00 | 100.00 | 100,00 |

### EXAMPLE 4 VARIATION OF CELLULOSE GUM

| Raw Materials | T2.1 | T2.2 | T2,3 |
|---|---|---|---|
| protein powder | 15,00 | 12,50 | 10,00 |
| corn starch (Thermflo) | 24,00 | 21,50 | 19,00 |
| methyl cellulose (Methocel A4M) | 15,00 | 25,00 | 35,00 |
| polydextrose (Litesse) | 40,00 | 37,50 | 35,00 |
| xanthan gum (Carrastab) | 6,00 | 3,50 | 1,00 |
| Total | 100.00 | 100,00 | 100,00 |

### EXAMPLE 5 VARIATION OF POLYDEXTROSE

| Raw Materials | T3.1 | T3.2 | T3,3 |
|---|---|---|---|
| protein powder | 17,50 | 15,00 | 11,25 |
| corn starch (Thermflo) | 26,50 | 24,00 | 20,25 |
| methyl cellulose (Methocel A4M) | 17,50 | 15,00 | 11,25 |
| polydextrose (Litesse) | 30,00 | 40,00 | 55,00 |
| xanthan gum (Carrastab) | 8,50 | 6,00 | 2,25 |
| Total | 100,00 | 100,00 | 100,00 |

### EXAMPLE 6 VARIATION OF XANTHAN GUM

| Raw Materials | T4.1 | T4.2 | T4,3 |
|---|---|---|---|
| protein powder | 16,25 | 15,00 | 14,00 |
| corn starch (thermoflo) | 25,25 | 24,00 | 23,00 |
| methyl cellulose (Methocel A4M) | 16,25 | 15,00 | 14,00 |
| polydextrose (litesse) | 41,25 | 40,00 | 39,00 |
| xanthan gum (carrastab) | 1,00 | 6.00 | 10,00 |
| Total | 100,00 | 100,00 | 100,00 |

The product was fried in oil for two minutes at 180°C and frozen in a nitrogen freezer for 30 minutes at -135°C. The product was vacuum packed at -0.9 bar and stored in a freezer at -20°C.

The product was reheated in an oven for 10 minutes at 180°C. A core temperature of 62°C was observed. The spinach filling remained intact with fluid present. In contrast, a product without the viscosity modifier was observed to be torn at the top and bottom and the filling had separated forming a large quantity of fluid.

The product was also reheated in an oven for 14 minutes at 180°C. The core temperature was 96°C. The product remained intact with some fluid present. The product without the viscosity modifying component was torn during preparation in the oven and the spinach filling contained excessive fluid.

The products were subsequently fried. The frying time appeared to have no influence on the integrity of the product.

## Claims

1. A food product comprising;
an outer structure comprising a casing, coating or body of foodstuff having an internal cavity;
the filling comprising a fluid and an optional solid component, wherein the fluid includes a viscosity modifying component so that the fluid has an initial viscosity at ambient temperature, an increased viscosity when heated, wherein the viscosity falls to a lower viscosity upon cooling to ambient temperature;
wherein the viscosity modifying component comprises:
| | |
|---|---|
| cellulose gum | 10-40%; |
| modified starch | 10-40%; |
| polydextrose | 30-55%; |
| hydrocolloid | 1-10%; |
and optional further ingredients;
wherein the percentages of ingredients are by dry weight and are selected from the ranges quoted to total 100%.

2. A food product as claimed in claim 1, wherein the viscosity modifying component does not include any egg albumen component.

3. A food product as claimed in claim 2, wherein the viscosity modifying component does not include any egg albumen component.

4. A food product as claimed in preceding claim, wherein the viscosity modifying component is present in an amount of 0.5% to 10% by dry weight as a percentage of the total weight of the filling.

5. A food product as claimed in claim 4, wherein the amount of viscosity modifying component is 1% to 6% by dry weight as a percentage of the total weight of the filling.

6. A food product as claimed in any preceding claim, wherein the modified starch is hydroxyalkylated starch.

7. A food product as claimed in claim 4, wherein the amount of viscosity modifying component is 3% to 6% by dry weight as a percentage of the total weight of the filling.

8. A food product as claimed in any preceding claim, wherein the amount of modified starch in the viscosity modifying component is from 15% to 40%, preferably 20% to 30%, more preferably 16% to 35%.

9. A food product as claimed in any preceding claim, wherein the cellulose gum in the viscosity modifying component is selected from the group consisting of: methyl cellulose, hydroxypropyl methyl cellulose, carboxymethyl cellulose, cellulose ether and mixtures thereof.

10. A food product as claimed in any preceding claim, wherein the amount of cellulose gum in the viscosity modifying agent is from 15% to 35%, preferably 10% to 20%, more preferably 10% to 20%.

11. A food product as claimed in any preceding claim, wherein the viscosity modifying component comprises a hydrocolloid selected from the group consisting of:
xanthan gum, carageenan gum, guar gum and mixtures thereof.

12. A food product as claimed in any preceding claim, wherein the viscosity modifying component comprises 5% to 10% hydrocolloid.

13. A food product as claimed in any preceding claim, wherein the viscosity modifying component comprises 30% to 55% polydextrose.

14. A food product as claimed in claim 13, wherein the viscosity modifying component comprises 5% to 55% polydextrose.

15. A food filling viscosity modifying component containing the ingredients recited in any preceding claim.
